# EUROPEAN PATENT APPLICATION

(11) **EP 3 680 145 A1**
(43) Date of publication of application: **15.07.2020**
(21) Application number: 18889961.1
(22) Date of filing: 12.11.2018
(51) Int. Cl.: B62B 3/02, B62B 5/06, B62B 5/00

(54) **DUAL-PURPOSE FOLDING TROLLEY**

(30) Priority: 05.11.2018 CN 201811308564; 05.11.2018 CN 201821812513 U
(71) Applicant: GUANGDONG SHUNHE INDUSTRIAL CO., LTD., YANGJIANG, Guangdong 529565 (CN)
(72) Inventor: JIAN, Shikun, Yangjiang Guangdong 529500 (CN)
(74) Representative: Petraz, Gilberto Luigi
(86) International application number: PCT/CN2018/114982
(87) International publication number: WO 2020/093416

(57) **Abstract**

The present invention discloses a dual-purpose folding trolley comprises a handle. A lower end of both sides of the handle is inserted into a lower connecting sleeve, and the lower connecting sleeve is mounted to a bend of a lower end of the handle. A locking tube is inserted into an inner side of the lower connecting sleeve. Two switches is further sleeved on the locking tube. An interior of the locking tube is provided with a locking rod. A first spring is sleeved on the locking rod. An outer side of the lower connecting sleeve is connected to a fixing connecting block. The fixing connecting block is rotatably connected to a movable caster via a short connecting tube. A first torsion spring is further sleeved on the short connecting tube. An upper horizontal tube is provided at the lower end of the handle and at a lower side of the locking tube. An upper horizontal tube sleeve is sleeved on a middle portion of the upper horizontal tube. A middle portion of an upper end of the upper horizontal tube sleeve is connected with an upper connecting tube. A lower bending tube is further inserted into a lower end of the fixing connecting block. The dual-purpose folding trolley can be converted and deformed into two-wheel using state or four-wheel using state, which is convenient to be converted, has a wide application range, can be folded, and does not taking up space when placed or carried.

## Description

### TECHNICAL FIELD

The present invention belongs to the technical field of trolleys, and specifically, relates to a dual-purpose folding trolley.

### BACKGROUND

When the staff receives the goods, they usually classify the goods and transfer them. In the process of transfer, since some goods are bulky and heavy, when they are moved by the trolley, the goods cannot be moved smoothly as the existing trolleys are generally small and have a load-bearing capacity which is not strong enough. It not only causes a very large physical consumption, but also affects the work efficiency. And the existing trolleys include two-wheel type and four-wheel type, which cannot be used for mutual deformation and has a small use range, and cannot be folded, taking up a lot of space.

### SUMMARY

The objective of the present invention is to provide an dual-purpose folding trolley to solve the problems set forth in the background above.

In order to achieve the above objective, the present invention provides the following technical solution.

A dual-purpose folding trolley comprises a handle, wherein a lower end of both sides of the handle is inserted into a lower connecting sleeve, and the lower connecting sleeve is mounted to a bend of a lower end of the handle, a locking tube being inserted into an inner side of the lower connecting sleeve, two switches being further sleeved on the locking tube, an interior of the locking tube being provided with a locking rod, a first spring being sleeved on the locking rod, the switch being connected to one end of the locking rod by a screw, another end of the locking rod being inserted into a hole at the lower end of the handle;
an outer side of the lower connecting sleeve is connected to a fixing connecting block, the fixing connecting block being rotatably connected to a movable caster via a short connecting tube, a first torsion spring being further sleeved on the short connecting tube; and
an upper horizontal tube is provided at the lower end of the handle and at a lower side of the locking tube, an upper horizontal tube sleeve being sleeved on a middle portion of the upper horizontal tube, a middle portion of an upper end of the upper horizontal tube sleeve being connected with an upper connecting tube, a lower bending tube being further inserted into a lower end of the fixing connecting block, a sliding sleeve being further sleeved on a middle portion of the lower bending tube, a lower horizontal tube being fixed between the sliding sleeves, three lower horizontal tube sleeves being mounted on the lower horizontal tube, the lower horizontal tube sleeve at a middle being connected to a lower end of the upper connecting tube, the two lower horizontal sleeves outside being connected to a lower connecting tube, a lower end of the lower connecting tube being connected to a supporting plate, an upper side of the lower bending tube being provided with a bearing plate, a lower end of the lower bending tube being inserted into a fixing connecting sleeve and a foot stand, a wheel being mounted on the foot stand, a lower end of the fixing connecting sleeve being further provided with a second spring, and a lower end of the second spring being provided with a positioning plug, the lower bending tube being rotatably connected with a spading plate.

Preferably, a second torsion spring at a connection of the foot stand and the fixing connecting sleeve, is further sleeved on the lower bending tube.

Preferably, the lower end of the handle and a circumferential side of the lower connecting sleeve are provided with holes for insertion of the two locking rods, and the locking rods are rotated by ninety degrees and respectively inserted into different holes.

The present invention has these technical effects and advantages: for the dual-purpose folding trolley, pressing the switch, opening the handle, the handle is linked with the upper horizontal tube, the upper connecting tube, the lower connecting tube and the supporting plate, and the foot stand and the movable caster are opened by the supporting plate; meanwhile, the locking rod is locked into the fixing connecting block, and a four-wheel using state is formed; pressing the switch again, the locking rod is locked, rotating the handle, and the locking rod is locked into the fixing connecting block, and a two-wheel using state is formed. The dual-purpose folding trolley is convenient to be converted, has a wide application range, can be folded, and does not taking up space when placed or carried.

### BRIEF DESCRIPTION OF THE DRAWINGS

FIG. 1 is a exploded schematic structural view according to the present invention;
FIG. 2 is a schematic structural view showing the present invention in a two-wheel using state;
FIG. 3 is a schematic structural view showing the present invention in a four-wheel using state;
FIG. 4 is a schematic structural view showing the present invention in a folded state.

In the figures, the reference numbers are as follows:
1 handle, 2 switch, 3 locking rod, 4 lower connecting sleeve, 5 first spring, 6 locking tube, 7 short connecting tube, 8 upper horizontal tube, 9 movable caster, 10 fixing connecting block, 11 first torsion spring, 12 upper horizontal tube sleeve, 13 upper connecting tube, 14 lower horizontal tube sleeve, 15 sliding sleeve, 16 lower horizontal tube, 17 lower curved tube, 18 lower connecting tube, 19 support plate, 20 bearing plate, 21 fixing connecting sleeve, 22 foot stand, 23 second torsion spring, 24 wheel, 25 second spring, 26 positioning plug, 27 spading plate.

### DETAILED DESCRIPTION

The technical solutions in the embodiments of the present invention are clearly and completely described in the following with reference to the accompanying drawings in the embodiments of the present invention. It is obvious that the described embodiments are only a part of the embodiments of the present invention, but not all embodiments. All other embodiments obtained by those skilled in the art based on the embodiments of the present invention without creative efforts falls within the protection scope of the present invention.

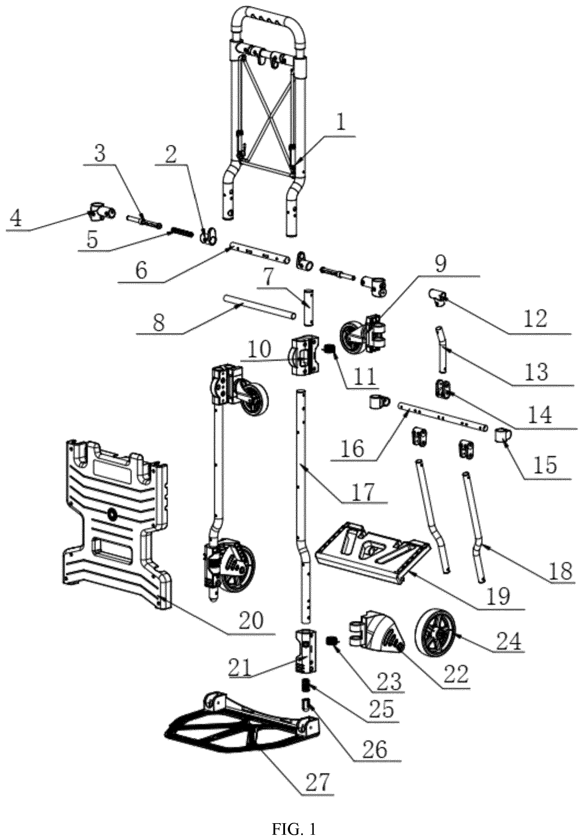

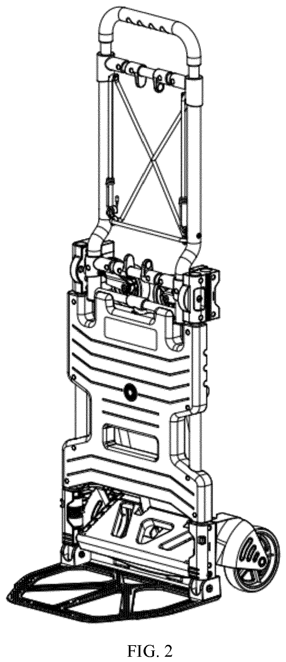

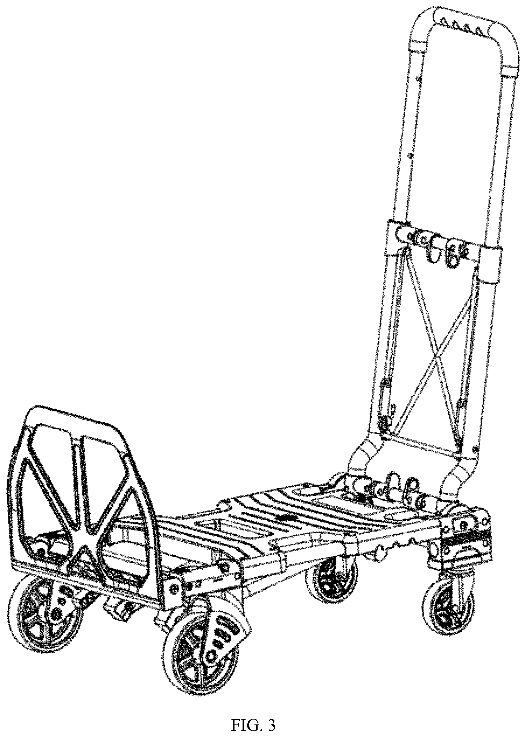

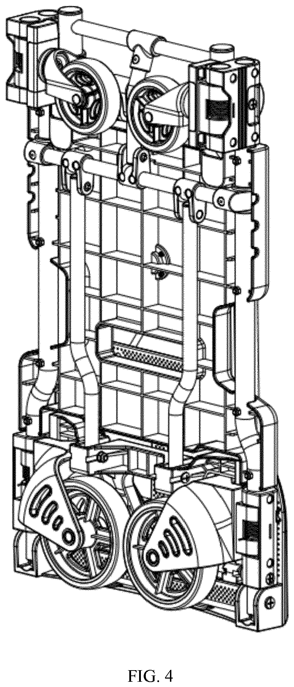

The present invention provides a dual-purpose folding trolley as shown in FIGS. 1-4, which comprises a handle 1. A lower end of both sides of the handle 1 is inserted into a lower connecting sleeve 4, and the lower connecting sleeve 4 is mounted to a bend of a lower end of the handle 1. A locking tube 6 is inserted into an inner side of the lower connecting sleeve 4. Two switches 2 is further sleeved on the locking tube 6. An interior of the locking tube 6 is provided with a locking rod 3. A first spring 5 is sleeved on the locking rod 3. The switch 2 is connected to one end of the locking rod 3 by a screw, and another end of the locking rod 3 is inserted into a hole at the lower end of the handle 1.

An outer side of the lower connecting sleeve 4 is connected to a fixing connecting block 10. The fixing connecting block 10 is rotatably connected to a movable caster 9 via a short connecting tube 7. A first torsion spring 11 is further sleeved on the short connecting tube 7.

An upper horizontal tube 8 is provided at the lower end of the handle 1 and at a lower side of the locking tube 6. An upper horizontal tube sleeve 12 is sleeved on a middle portion of the upper horizontal tube 8. A middle portion of an upper end of the upper horizontal tube sleeve 12 is connected with an upper connecting tube 13. A lower bending tube 17 is further inserted into a lower end of the fixing connecting block 10. A sliding sleeve 15 is further sleeved on a middle portion of the lower bending tube 17. A lower horizontal tube 16 is fixed between the sliding sleeves 15. Three lower horizontal tube sleeves 14 are mounted on the lower horizontal tube 16. The lower horizontal tube sleeve 14 at a middle is connected to a lower end of the upper connecting tube 13, and the two lower horizontal sleeves 14 outside are connected to a lower connecting tube 18. A lower end of the lower connecting tube 18 is connected to a supporting plate 19. An upper side of the lower bending tube 17 is provided with a bearing plate 20, and a lower end of the lower bending tube 17 is inserted into a fixing connecting sleeve 21 and a foot stand 22. A wheel 24 is mounted on the foot stand 22. A lower end of the fixing connecting sleeve 21 is further provided with a second spring 25. A lower end of the second spring 25 is provided with a positioning plug 26. The lower bending tube 17 is rotatably connected with a spading plate 27.

Specifically, a second torsion spring 23 at a connection of the foot stand 22 and the fixing connecting sleeve 21, is further sleeved on the lower bending tube 17.

Specifically, the lower end of the handle 1 and a circumferential side of the lower connecting sleeve 4 are provided with holes for insertion of the two locking rods 3, and the locking rods 3 are rotated by ninety degrees and respectively inserted into different holes.

Pressing the switch 2, opening the handle 1, the handle 1 is linked with the upper horizontal tube 8, the upper connecting tube 13, the lower connecting tube 4 and the supporting plate 19. The foot stand 22 and the movable caster 9 are opened by the supporting plate 19. Meanwhile, the locking rod 3 is locked into the fixing connecting block 10 and a four-wheel using state is formed. Pressing the switch 2 again, the locking rod 3 is locked. Rotating the handle, the locking rod 3 is locked into the fixing connecting block 10, and a two-wheel using state is formed. The dual-purpose folding trolley is convenient to be converted, has a wide application range, can be folded, and does not taking up space when placed or carried.

It should be noted that the above description is only a preferred embodiment of the present invention and is not intended to limit the present invention. Although the present invention has been described in detail with reference to the foregoing embodiments. For those skilled in the art, modifications still may be made to the technical solutions described in the foregoing embodiments, or equivalent substitutions still may be made to some of the technical features therein. And any modifications, equivalent substitutions, improvements, etc., which are made within the spirit and principles of the present invention, should be included within the protection scope of the present invention.

## Claims

1. A dual-purpose folding trolley comprising a handle (1), **characterized in that**, a lower end of both sides of the handle (1) is inserted into a lower connecting sleeve (4), and the lower connecting sleeve (4) is mounted to a bend of a lower end of the handle (1), a locking tube (6) being inserted into an inner side of the lower connecting sleeve (4), two switches (2) being further sleeved on the locking tube (6), an interior of the locking tube (6) being provided with a locking rod (3), a first spring (5) being sleeved on the locking rod (3), the switch (2) being connected to one end of the locking rod (3) by a screw, another end of the locking rod (3) being inserted into a hole at the lower end of the handle (1);
an outer side of the lower connecting sleeve (4) is connected to a fixing connecting block (10), the fixing connecting block (10) being rotatably connected to a movable caster (9) via a short connecting tube (7), a first torsion spring (11) being further sleeved on the short connecting tube (7); and
an upper horizontal tube (8) is provided at the lower end of the handle (1) and at a lower side of the locking tube (6), an upper horizontal tube sleeve (12) being sleeved on a middle portion of the upper horizontal tube (8), a middle portion of an upper end of the upper horizontal tube sleeve (12) being connected with an upper connecting tube (13), a lower bending tube (17) being further inserted into a lower end of the fixing connecting block (10), a sliding sleeve (15) being further sleeved on a middle portion of the lower bending tube (17), a lower horizontal tube (16) being fixed between the sliding sleeves (15), three lower horizontal tube sleeves (14) being mounted on the lower horizontal tube (16), the lower horizontal tube sleeve (14) at a middle being connected to a lower end of the upper connecting tube (13), the two lower horizontal sleeves (14) outside being connected to a lower connecting tube (18), a lower end of the lower connecting tube (18) being connected to a supporting plate (19), an upper side of the lower bending tube (17) being provided with a bearing plate (20), a lower end of the lower bending tube (17) being inserted into a fixing connecting sleeve (21) and a foot stand (22), a wheel (24) being mounted on the foot stand (22), a lower end of the fixing connecting sleeve (21) being further provided with a second spring (25), and a lower end of the second spring (25) being provided with a positioning plug (26), the lower bending tube (17) being rotatably connected with a spading plate (27).

2. The dual-purpose folding trolley according to claim 1, wherein a second torsion spring (23) at a connection of the foot stand (22) and the fixing connecting sleeve (21), is further sleeved on the lower bending tube (17).

3. The dual-purpose folding trolley according to claim 1, wherein the lower end of the handle (1) and a circumferential side of the lower connecting sleeve (4) are provided with holes for insertion of the two locking rods (3), and the locking rods (3) are rotated by ninety degrees and respectively inserted into different holes.
